# EUROPEAN PATENT APPLICATION

(11) **EP 4 622 027 A1**
(43) Date of publication of application: **24.09.2025**
(21) Application number: 25164138.7
(22) Date of filing: 17.03.2025
(51) Int. Cl.: H02B 1/052, H02B 1/20

(54) **PLATE FOR DIN RAIL STYLE DEVICES**

(30) Priority: 18.03.2024 US 202418607958
(71) Applicant: Schneider Electric Buildings Americas, Inc., Carrollton, TX 75006 (US)
(72) Inventor: Boretti, David John, Andover, MA, 01810 (US)
(74) Representative: Manitz Finsterwald Patent- und Rechtsanwaltspartnerschaft mbB

(57) **Abstract**

A wall plate (100) for DIN rail style devices (102, 104) includes a rail (106) extending along a longitudinal axis (A) and configured for receiving DIN rail style devices (102, 104) mounted thereto. A surface mount section (108) extends along the longitudinal axis (A) from a first lateral end (110) of the surface mount section (108) to a second lateral end (112) of the surface mount section (108). The rail (106) is connected integrally to the surface mount section (108). The surface mount section (108) is configured to be mounted to a surface to support the rail (106) and DIN rail style devices (102, 104) from the surface. A cable support (114, 116) is connected integrally to the surface mount section (108). The cable support (114, 116) includes cable anchors extending laterally away from the rail (106) configured to support cables and/or wires extending from the DIN rail style devices (102, 104) tied to the cable anchors. The rail (106), the surface mount section (108), and the cable support (114, 116) are monolithic with one another.

## Description

### BACKGROUND

### 1. Field

The present disclosure relates generally to the field of electronics, and more particularly to systems and methods for securing electronic components to a rail system such as a DIN rail system.

### 2. Description of Related Art

DIN rails have been used traditionally for mounting circuit breakers and industrial control equipment in equipment racks and the like. For example, a 35 mm DIN rail can be populated with modules such as circuit breakers, relays, controllers, or the like, that have a 35-mm rail receiving feature. Cables and wires connect into the modules. Existing mounting devices for controllers such as a room controllers are formed of multiple different elements which are attached to one another, leading to burdensome and overly lengthy installations. Moreover, requiring multiple elements to be coupled to one another can cause issues relating to relative orientation of the elements, along with possible issues with the availability or feasibility of an installation having a particular orientation or size. Wires and cables hanging from a controller can cause damage to a controller, such as the printed circuit board assembly (PCBA), connectors, and/or the wire or cable based on the weight of the wire or cable dangling from the connector of the controller.

The conventional techniques have been considered satisfactory for their intended purpose. However, there is an ever-present need for improved systems and methods for DIN rail style devices. This disclosure provides a solution for this need.

### SUMMARY

A wall plate for DIN rail style devices includes a rail extending along a longitudinal axis and configured for receiving DIN rail style devices mounted thereto. A surface mount section extends along the longitudinal axis from a first lateral end of the surface mount section to a second lateral end of the surface mount section. The rail is connected integrally to the surface mount section. The surface mount section is configured to be mounted to a surface to support the rail and DIN rail style devices from the surface. A cable support is connected integrally to the surface mount section. The cable support includes cable anchors extending laterally away from the rail configured to support cables and/or wires extending from the DIN rail style devices tied to the cable anchors. The rail, the surface mount section, and the cable support are monolithic with one another.

The rail can include a mounting plate extending along the longitudinal axis. An opposed pair of rail risers can extend from lateral edges of the mounting plate. The rail risers can extend longitudinally parallel to the longitudinal axis, and can extend out of plane from the mounting plate. A respective mounting flange can be connected to each of the respective rail risers. The mounting flanges can be defined in a plane parallel to the mounting plate, can extend away from one another, and can be configured to receive the DIN rail style devices mounted thereto.

The surface mount section can be coplanar with the mounting plate. The surface mount section and mounting plate can define a plurality of fastener apertures therethrough in an array for flexibility in mounting the wall plate to a planar surface. The cable support can be connected to the surface mount section by a support riser that extends laterally from the surface mount section in a direction in common with a first one of the rail risers. A second support riser can extend from the wall mount section on a side of the wall mount section opposite from the first support riser with the rail between the first and second support risers. A second cable support can extend from the second support riser in a direction away from the rail. The first and second cable supports can define a first plane that is further from the surface mount section than is a second plane defined by the mounting flanges of the rail.

Each of the first and second cable supports can have cable anchors that include a linear series of cable tie apertures extending in a direction parallel to the longitudinal axis, with a respective cable tie pillar between each adjacent pair of the cable tie apertures configured to support cables tied thereto. A comb including a linear series of cable tie comb teeth can extend to an edge of the wall plate with a respective comb tooth gap defined between each adjacent pair of the cable tie comb teeth. The cable tie comb teeth can be configured to support cables tied thereto. The cable tie apertures can be more proximate to the rail than are the cable tie comb teeth. Each of the cable tie comb teeth can terminate with a t-cross bar.

A first major aperture can be defined in the surface mount section in an area between the rail and the first support riser, and between the first and second lateral ends of the surface mount section. A second major aperture can be defined in the surface mount section in an area between the rail and the second support riser, and between the first and second lateral ends of the surface mount section. Each of the first and second major apertures can be several times larger than any of a plurality of fastener apertures defined through the surface mount section and through the mounting plate of the rail.

The first lateral end of the surface mount section can define a first socket more proximate to the second cable support than to the first cable support. The second lateral end of the surface mount section can define a second socket more proximate to the first cable support than to the second cable support. A first interlock tab can extend from the first lateral end of the surface mount section more proximate to the first cable support than to the second cable support. The first interlock tab can be equidistant from the rail with the second socket. A second interlock tab can extend from the second lateral end of the surface mount section more proximate to the second cable support than to the first cable support. The second interlock tab can be equidistant from the rail with the first socket. The first and second interlock tabs can be sized and shaped to interlock with the first and second sockets for end-to-end connection of the wall plate with one or more like wall plates for facilitating aligning multiple wall plates in a straight line along the longitudinal axis, wherein any of the multiple wall plates can be rotated 180 degrees and still fit together for flexibility in mounting and mating the multiple wall plates.

A first end stop can extend out of plane from the surface mount section at the first lateral end of the surface mount section, configured to stop rail mounted components sliding off the rail at the first lateral end of the surface mount section. A second end stop can extend out of plane from the surface mount section at the second lateral end of the surface mount section, configured to stop rail mounted components sliding off the rail at the second lateral end of the surface mount section.

Each of the first and second cable supports, the first and second support risers, the surface mount section, the mounting plate, the rail risers, the mounting flanges, and the first and second end stops can define a respective front surface and an opposed respective back surface. The respective front and back surfaces can be parallel to one another and are free from overhangs so the back surfaces of the wall plate can stack flush against the front surfaces of a like wall plate.

A stack of wall plates can include a first wall plate as described above. A second wall plate as described above can be stacked against the first wall plate with the respective front surfaces of the first wall plate flush against the respective back surfaces of the second wall plate. A third wall plate as described above can be stacked against the second wall plate with the respective front surfaces of the second wall plate flush against the respective back surfaces of the third wall plate.

A method of mounting modules includes attaching one or more DIN rail style modules to the rail of a first wall plate as described above. The method includes securing cables connected to the one or more DIN rail style modules individually or in one or more groups to the first cable support with ties.

The method can include securing cables to the second cable support, extending in a direction opposite from that of cables secured to the first cable support. The ties can be tied to the cable tie pillars or to the cable tie comb teeth, or to both. The method can include mounting the first wall plate to a first surface with fasteners prior to attaching the one or more DIN rail style modules to the rail. The method can include mounting a second wall plate to the first surface in end-to-end engagement with the first wall plate. The second wall plate can be shorter along its longitudinal axis than is the first wall plate.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a plan view of an embodiment of a wall plate constructed in accordance with the present disclosure, showing the rail and the cable supports;
Fig. 2 is a perspective view of the wall plate of Fig. 1, showing the risers and end stops;
Fig. 3 is a side elevation view of the wall plate of Fig. 1, showing elevations of the cable supports, DIN-rail type mounting flanges, and end stops;
Fig. 4 is a schematic perspective view of a plurality of wall plates of Fig. 1, showing five of the wall plates stacked and tied together for shipping, handling, or storage;
Fig. 5 is a perspective view of two wall plates of Fig. 1 mounted to a surface and engaged end to end with one another; and
Fig. 6 is a perspective view of the wall plates of Fig. 5, showing two modules and associated wires and cables connected thereto, all mounted to the wall plates.

### DETAILED DESCRIPTION OF THE PREFERRED EMBODIMENTS

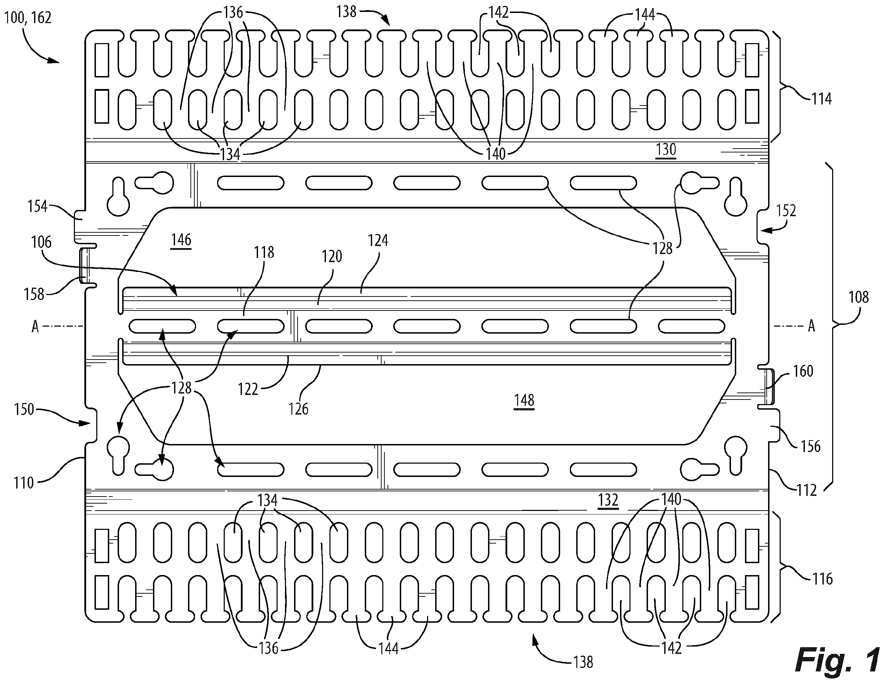

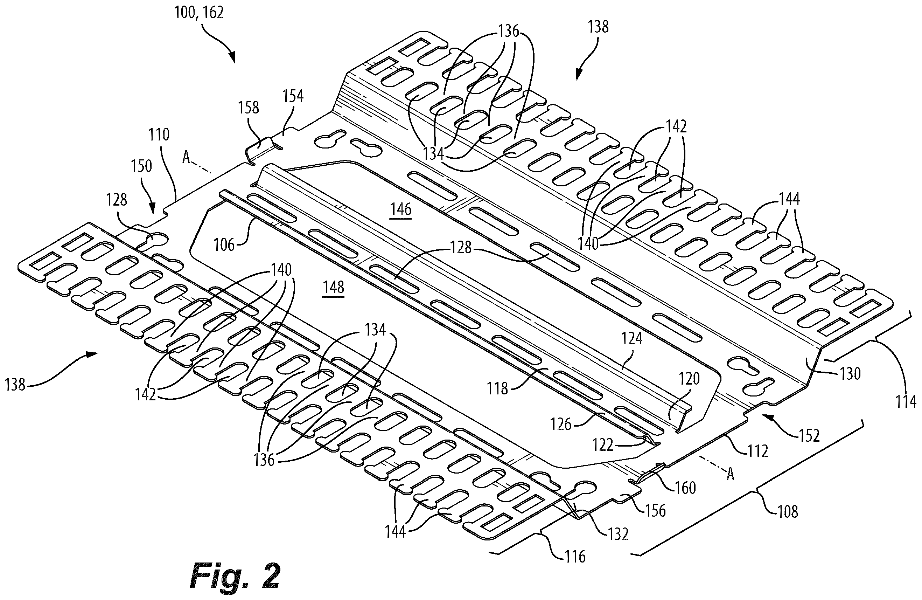

Reference will now be made to the drawings wherein like reference numerals identify similar structural features or aspects of the subject disclosure. For purposes of explanation and illustration, and not limitation, a partial view of an embodiment of a wall plate in accordance with the disclosure is shown in Fig. 1 and is designated generally by reference character 100. Other embodiments of systems in accordance with the disclosure, or aspects thereof, are provided in Figs. 2-6, as will be described. The systems and methods described herein can be used to stabilize cables and wires of DIN rail style modules mounted to walls, ceilings, cabinets, and the like.

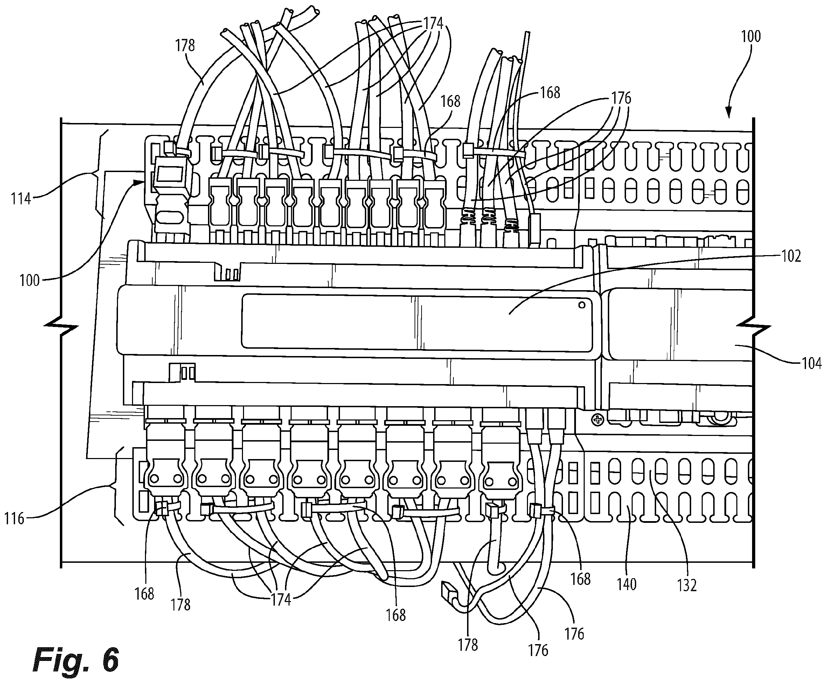

The wall plate 100 for mounting DIN rail style devices 102, 104 (labeled in Fig. 6) includes a rail 106 extending along a longitudinal axis A and configured for receiving DIN rail style devices 102, 104 mounted thereto. A surface mount section 108 extends along the longitudinal axis A from a first lateral end 110 of the surface mount section 108 to a second lateral end 112 of the surface mount section 108. The rail 106 is connected integrally to the surface mount section 108. The surface mount section 108 is configured to be mounted to a surface such as a wall, ceiling, cabinet interior surface, wire mesh cable tray, or the like, to support the rail 106 and DIN rail style devices 102, 104 (shown in Fig. 6) from the surface. A first cable support 114 is connected integrally to the surface mount section 108, e.g., extending from the top of the surface mount section 108 as oriented in Figs. 1 and 2. A similar second cable support 116 extends from the opposite side of the surface mount section 108, e.g., from the bottom side as oriented in Figs. 1-2. The cable supports 114, 116 include cable anchors extending laterally away from the rail 106 configured to support cables and/or wires extending from the DIN rail style devices 102, 104 tied to the cable anchors, as will be described further below with reference to Fig. 6. The rail 106, the surface mount section 108, and the cable supports 114, 116 may be formed of a metallic material and may be monolithic with one another. The wall plate 100 can be formed, e.g., by stamping a sheet of metallic material into shape and/or shearing, punching, or machining to form through-holes.

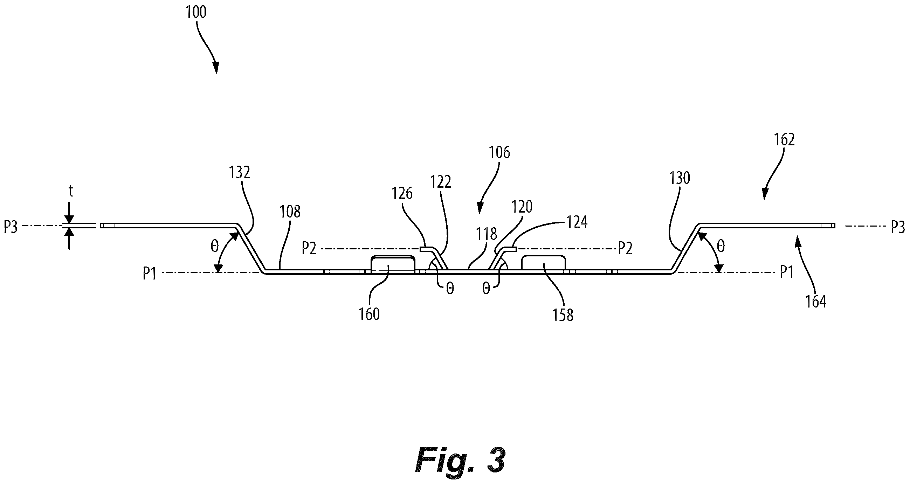

With continued reference to Figs. 1-2, the rail 106 includes a mounting plate 118 extending along the longitudinal axis A. An opposed pair of rail risers 120, 122 extend from lateral edges of the mounting plate 118. The rail risers 120, 122 extend longitudinally parallel to the longitudinal axis A, as shown in Figs. 1-2, and extend out of plane from the mounting plate 118 as can be seen in the elevation of Fig. 3. A respective mounting flange 124, 126 is connected to each of the respective rail risers 120, 122. The mounting flanges 124, 126 are defined in a plane P2 parallel to the mounting plate 118, which is defined in a plane P1, both labeled in Fig. 3. The Plane P1 is also co-planar with the surface mount section 108. The mounting flanges 124, 126 extend away from one another, and define longitudinal edges that are configured to receive the DIN rail style devices 102, 104 of Fig. 6 mounted thereto.

Referring again to Figs. 1-2, the surface mount section 108 and mounting plate 118 define a plurality of fastener apertures 128 therethrough in an array for flexibility in mounting the wall plate 100 to a planar surface such as a wall, a ceiling, a cabinet interior surface, cable tray surface, or the like, using one or more fasteners, such as screws and/or cable ties. For sake of clarity in the drawings, only some of the apertures 128 are labeled in Figs. 1-2.

The cable support 114 is connected to the surface mount section 108 by a support riser 130 that extends laterally from the surface mount section, e.g., upwards as oriented in Fig. 1, in a direction in common with the rail riser 120. A second support riser 132 extends from the wall mount section 108 on a side of the wall mount section 108 opposite from the first support riser 130 with the rail 106 located between the first and second support risers 130, 132. The second cable support 116 extends from the second support riser 132 in a direction away from the rail 106, e.g., downwards as oriented in Fig. 1.

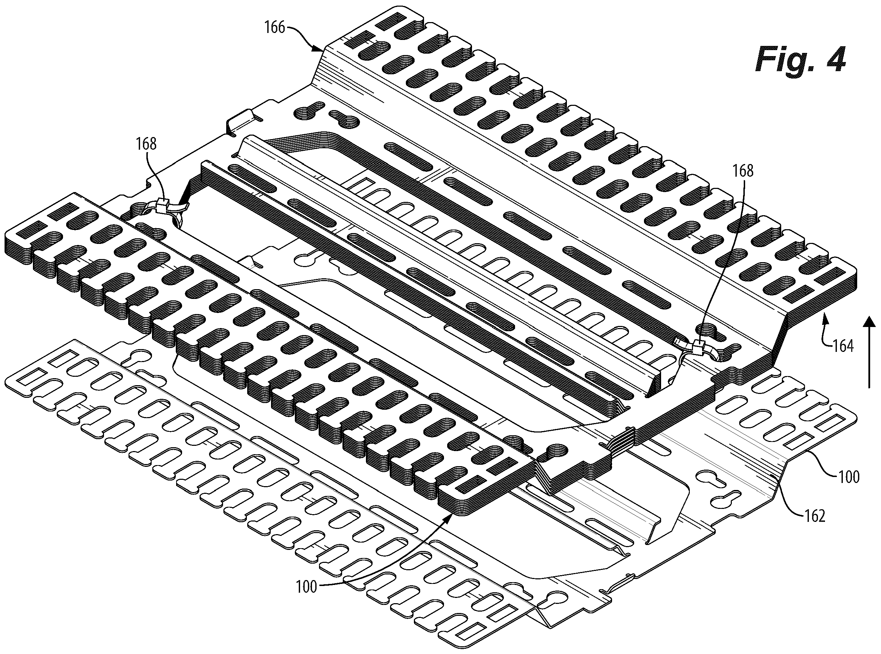

As oriented in Fig. 3, both of the first and second support risers 130, 132 extend upward. This spaces the first and second cable supports 114, 116 from the surface mount section 108. The support risers 130, 132 rise enough to make the first and second cable supports 114, 116 define a plane P3 that is further from the surface mount section 108 and its plane P1 than is the second plane P2 of the rail 106. The oblique angles θ of the support risers 130, 132 are parallel to the oblique angles θ of the respective rail risers 120, 122. These angles θ are matched to allow multiple plates 100 to be stacked evenly as further described below with reference to Fig. 4.

With reference again to Figs. 1-2, each of the first and second cable supports 114, 116 has cable anchors that include a linear series of cable tie apertures 134. The linear series of the cable tie apertures 134 extends in a direction parallel to the longitudinal axis A. A respective cable tie pillar 136 extends between each adjacent pair of the cable tie apertures 134. For the sake of clarity in the drawings, only a few of the apertures 134 and pillars 136 are labeled in Figs. 1-2. Each cable support 114, 116 also includes a comb 138 including a linear series of cable tie comb teeth 140 that extend to an edge of the wall plate 100 with a respective comb tooth gap 142 defined between each adjacent pair of the cable tie comb teeth 140. For the sake of clarity in the drawings, only a few of the teeth 140 and gaps 142 are labeled in Figs. 1-2. The cable tie apertures 134 in each cable support 114, 116 are more proximate to the rail 106 than are the cable tie comb teeth 140. Each of the cable tie comb teeth 140 terminates with a respective t-cross bar 144, wherein the comb tooth gaps 142 open outward between the t-cross bars 144. The cable tie pillars 136 and comb teeth 140 are configured to support cables tied thereto as will be further described below with reference to Fig. 6. The rectangular apertures 129 provide another available method of anchoring, e.g. if there are some cables that need to be trained at a right angle to exit right or left instead of vertical up and down as oriented in Figs. 1 and 5-6, which helps provide the plate 100 flexibility in any orientation.

A first major aperture 146 is defined in the surface mount section 108 in an area between the rail 106 and the first support riser 130, and between the first and second lateral ends 110, 112 of the surface mount section 108. A second major aperture 148 is defined in the surface mount section 108 in an area between the rail 106 and the second support riser 132, and between the first and second lateral ends 110, 112 of the surface mount section 108. Each of the first and second major apertures 146, 148 may be several times larger than any of the fastener apertures 128 defined through the surface mount section 108 and through the mounting plate 118 of the rail 106. The major apertures 146, 148 through the surface mount section 108 reduce the weight of the wall plate 100 relative to the weight if the major apertures 146, 148 were omitted.

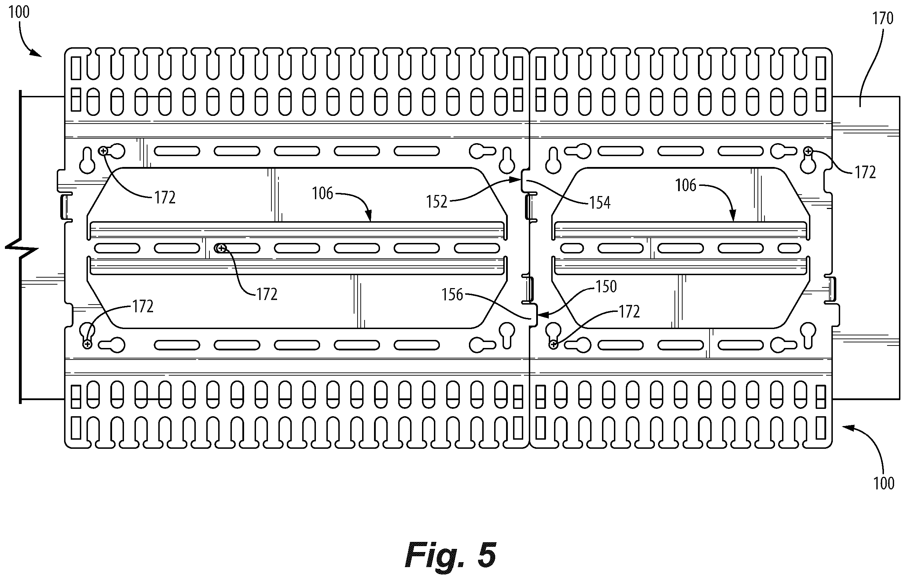

The first lateral end 110 of the surface mount section 108 defines a first socket 150 more proximate to the second cable support 116 than to the first cable support 114. The second lateral end 112 of the surface mount section 108 defines a second socket 152 more proximate to the first cable support 114 than to the second cable support 116. A first interlock tab 154 extends from the first lateral end 110 of the surface mount section 108 more proximate the first cable support 114 than to the second cable support 116. The first interlock tab 154 is equidistant from the rail 106 with the second socket 152. A second interlock tab 156 extends from the second lateral end 112 of the surface mount section 108 more proximate the second cable support 116 than to the first cable support 114. The second interlock tab 156 is equidistant from the rail 106 with the first socket 150. The first and second interlock tabs 154, 156 are sized and shaped to interlock with the first and second sockets 150, 152 for end-to-end connection of the wall plate 100 with one or more like wall plates 100 as shown in Fig. 5. This makes it so in two end to end plates 100, either plate 100 can be rotated 180 degrees and still fit together. This interlock aids in self-alignment of plates 100 when mounted in a row, keeping the plates 100 aligned along the longitudinal axis A. The interlock sockets and tabs 150, 152, 154, 156 are all defined in the plane P1 (labeled in Fig. 3) of the surface mount section 108.

With continued reference to Figs. 1-2, a first end stop 158 extends out of plane P1 in the same direction as the rail 106 as shown in Fig. 3, from the surface mount section 108 at the first lateral end 110 of the surface mount section 108 between the first interlock tab 154 and the first socket 150, between the rail 106 and the first interlock tab 154. A second end stop 160 extends out of plane P1, in the same direction as the rail 106 as oriented in Fig. 3, from the surface mount section 108 at the second lateral end 112 of the surface mount section 108 between the second interlock tab 156 and the second socket 152, between the rail 106 and the second interlock tab 156. The end stops 158, 160 are configured to stop rail mounted components or devices 102, 104 (labeled in Fig. 6) from sliding off of the rail 106 at the respective lateral ends 110, 112 of the surface mount section 108. The end stops 158, 160 do not extend from the surface mount section 108 as far as the rail 106 does, e.g., upwards as oriented in Fig. 3.

Each of the first and second cable supports 114, 116, the first and second support risers 130, 132, the surface mount section 108, the mounting plate 118, the rail risers 120, 122, the mounting flanges 124, 126, the first and second interlock tabs 154, 156, and the first and second end stops 158, 160 defines a respective front surface 162 (shown in Figs. 1-2) and an opposed respective back surface 164 (labeled in Fig. 3). The respective front and back surfaces 162, 164 are parallel to one another, giving the wall plate 100 a substantially constant thickness t, labeled in Fig. 3. Those skilled in the art will readily appreciate that bends between the parallel portions of front and back surfaces 162, 164, e.g., where risers 120, 122, 130, 132 bend out of the planes P1, P2, and P2, may constitute minor interruptions in the constant thickness t of the wall plate 100, but not enough to prevent the flush stacking of multiple wall plates 100. Moreover, the front and back surfaces 162, 164 are free from overhangs in the vertical direction as oriented in Fig. 3, so the back surfaces 164 of the wall plate 100 can stack flush against the front surfaces 162 of a like wall plate 100 as shown in Fig. 4.

With reference now to Fig. 4, a stack of wall plates 100, each as described above, can include any suitable number of wall plates 100. Creating a stack 166 can start with a first wall plate 100. A second wall plate 100 as described above is stacked against the first wall plate 100 with the respective front surfaces 162 of the first wall plate 100 flush against the respective back surfaces 164 of the second wall plate 100, as indicated schematically by the large arrow in Fig. 4. This stacking process can be repeated with a third wall plate 100 as described above being stacked against the second wall plate 100 with the respective front surfaces 162 of the second wall plate 100 flush against the respective back surfaces 164 of the third wall plate 100, and so on for as many wall plates 100 as desired. For example, stacks of five wall plates 100, as shown in Fig. 4, can be zip tied together for shipping, storage, and the like, using zip ties 168 or any other suitable means of fixing together the stack 166.

With reference now to Fig. 5, method of mounting modules, components, or devices 102, 104 (labeled in Fig. 6) is described. The method includes mounting the first wall plate 100, e.g., the wall plate on the left in Fig. 5, to a surface 170, such as a wall, ceiling, interior cabinet surface, cable tray surface, or the like, with fasteners 172 such as screws, bolts or any other suitable type of fastener, passing through one or more of the apertures 128, labeled in Figs. 1-2. Optionally as needed, the method includes mounting a second wall plate 100, e.g., the wall plate 100 on the right in Fig. 5, to the surface 170 in end-to-end engagement with the first wall plate 100 as described above with reference to the interlock tabs 154, 156 and sockets 150, 152. The second wall plate 100 can be shorter, longer, or the same length along its longitudinal axis A than is the first wall plate, although in Fig. 5, the second wall plate 100 (e.g., on the right in Fig. 5) is shorter than the first. Those skilled in the art will readily appreciate that while Fig. 5 shows two of the wall plates 100 interlocked end to end, any number of wall plates can be mounted end-to-end without departing from the scope of this disclosure.

With reference now to Fig. 6, after mounting the wall plate or plates 100 to the surface 170, the method includes attaching the one or more DIN rail style modules 102, 104 to the rail or rails 106, which are labeled in Fig. 5. In Fig. 6, two DIN rail style modules 102, 104 are mounted to the rails 106 of the wall plates 100 of Fig. 5. The method includes connecting cables 174, 176, 178 which for purposes herein includes multi-wire cables, single wires, optic-fibers, or any other suitable type of wire or cable, to the one or more DIN rail style modules 102, 104. The method includes securing the cables 174, 176, 178 to the first and second cable supports 114, 116, wherein the cables 174, 176, 178 as oriented in Fig. 6 that extend upward from their modules 102, 104 are secured to the first cable support 114, and those cables 174, 176, 178 extending downward as oriented in Fig. 6 are secured to the second cable support 116. Cables are not shown connected to module 104 yet in Fig. 6 for illustrative purposes. The cables 174, 176, 178 can be secured to the cable supports 114, 116 individually or in one or more groups with ties such as zip ties 168 or the like, extending around a bundle of one or more cables 174, 176, 178 and one or more of the pillars 136 and/or teeth 140. The pillars 136 and/or teeth 140 can be used for securing the cables 174, 176, and 178, depending on the size of the respective connector or connectors 180. In Fig. 6, the cables 178 are secured individually to respective teeth 140, cables 174 are secured in groups of two or three to respective teeth 140, and cables 176 are secured to respective teeth 140 in groups of two or more. The cables 176 could optionally be tied individually to pillars 136 due to the compact size of the connectors of the cables 176.

Wall plates 100 can provide simplified, quicker installation of controllers and other devices, and can support excess weight of cabling to prevent damage to connected devices. Systems and methods as disclosed herein can be used for mounting devices directly to walls, ceilings, cabinets, cable trays, or the like. They can be used for anchoring and taming wires/cabling, and can alleviate stress on connectors/headers and printed circuit boards due to the excess weight of heavy cabling induced on the device, electronics, printed circuit board assembly (PCBA), and connectors/headers. They can provide direct installation, and self-aligning when using multiple wall plates 100 secured end-to-end with one another. The wall plates 100 can be stacked for compact storage, shipping, and handling.

The wall plates 100 disclosed herein provide for a one-piece design, while providing flexibility when mounting in multiple orientations and with multiple different types of modules and cables. The plates 100 can be pre-formed into a complete mounting system for din-rail style devices, being stamped from a single piece of sheet metal. The wall plates can be stamped one-piece galvanized sheet metal, or any other suitable material and forming technique to make them robust, sturdy, and protective. A stamped one-piece design makes the wall plates 100 simple and affordable to make and use. The rail 106 of the wall plates 100 described above can a preformed/stamped 35 mm DIN-Rail carrier configuration, e.g. for quickly mounting lighting/blind controllers, breakers and/and or any other suitable type of DIN-Rail devices. This incorporated DIN-rail can eliminate the need for additional DIN-rail strips attached to the wall plates 100. The wall plates 100 can be coated to prevent rusting in high humidity environments.

Wall plates 100 can be mounted in multiple orientations. Built in end stops on both ends, e.g. end stops 156 and 158, can prevent controllers from sliding off of the rail 106 when mounted vertically or exposed to high vibrations. This can eliminate the need for additional DIN hardware. Wall plates 100 provide multiple anchoring points (finger comb style) for anchoring each wire/cable or group of wires/cables via cable ties or any other suitable other form of banding such as string, wire, electric tape, or the like.

The methods and systems of the present disclosure, as described above and shown in the drawings, provide for stabilizing cables and wires of DIN-rail style modules mounted to walls, ceilings, cabinets, and the like. While the apparatus and methods of the subject disclosure have been shown and described with reference to preferred embodiments, those skilled in the art will readily appreciate that changes and/or modifications may be made thereto without departing from the scope of the subject disclosure.

## Claims

1. A wall plate for DIN rail style devices comprising:
a rail extending along a longitudinal axis and configured for receiving DIN rail style devices mounted thereto;
a surface mount section extending along the longitudinal axis from a first lateral end of the surface mount section to a second lateral end of the surface mount section, wherein the rail is connected integrally to the surface mount section, wherein the surface mount section is configured to be mounted to a surface to support the rail and DIN rail style devices from the surface; and
a cable support connected integrally to the surface mount section, wherein the cable support includes cable anchors extending laterally away from the rail configured to support cables and/or wires extending from the DIN rail style devices tied to the cable anchors securing the cables and/or wires to the cable anchors,
wherein the rail, the surface mount section, and the cable support are monolithic with one another.

2. The wall plate as recited in claim 1, wherein the rail includes:
a mounting plate extending along the longitudinal axis;
an opposed pair of rail risers extending from lateral edges of the mounting plate, wherein the rail risers extend longitudinally parallel to the longitudinal axis, and extend out of plane from the mounting plate; and
a respective mounting flange connected to each of the respective rail risers, wherein the mounting flanges are defined in a plane parallel to the mounting plate, extend away from one another, and are configured to receive the DIN rail style devices mounted thereto;
in particular, wherein the surface mount section is coplanar with the mounting plate, and wherein the surface mount section and mounting plate define a plurality of fastener apertures therethrough in an array for flexibility in mounting the wall plate to a planar surface.

3. The wall plate as recited in claim 2, wherein the cable support is connected to the surface mount section by a support riser that extends laterally from the surface mount section in a direction in common with a first one of the rail risers.

4. The wall plate as recited in claim 3, wherein the cable support is a first cable support, wherein the support riser is a first support riser and further comprising:
a second support riser extending from the wall mount section on a side of the wall mount section opposite from the first support riser with the rail between the first and second support risers; and
a second cable support extending from the second support riser in a direction away from the rail.

5. The wall plate as recited in claim 4, wherein the first and second cable supports define a first plane that is further from the surface mount section than is a second plane defined by the mounting flanges of the rail.

6. The wall plate as recited in claim 4, wherein each of the first and second cable supports has cable anchors that include:
a linear series of cable tie apertures extending in a direction parallel to the longitudinal axis, with a respective cable tie pillar between each adjacent pair of the cable tie apertures configured to support cables tied thereto; and
and a comb including linear series of cable tie comb teeth extending to an edge of the wall plate with a respective comb tooth gap defined between each adjacent pair of the cable tie comb teeth, wherein the cable tie comb teeth are configured to support cables tied thereto, wherein the cable tie apertures are more proximate to the rail than are the cable tie comb teeth;
in particular, wherein each of the cable tie comb teeth terminates with a t-cross bar.

7. The wall plate as recited in claim 4, wherein a first major aperture is defined in the surface mount section in an area between the rail and the first support riser, and between the first and second lateral ends of the surface mount section, and wherein a second major aperture is defined in the surface mount section in an area between the rail and the second support riser, and between the first and second lateral ends of the surface mount section, wherein each of the first and second major apertures is several times larger than any of a plurality of fastener apertures defined through the surface mount section and through the mounting plate of the rail.

8. The wall plate as recited in claim 4, wherein the first lateral end of the surface mount section defines a first socket more proximate to the second cable support than to the first cable support, wherein the second lateral end of the surface mount section defines a second socket more proximate to the first cable support than to the second cable support, and further comprising:
a first interlock tab extending from the first lateral end of the surface mount section more proximate to the first cable support than to the second cable support, wherein the first interlock tab is equidistant from the rail with the second socket; and
a second interlock tab extending from the second lateral end of the surface mount section more proximate to the second cable support than to the first cable support, wherein the second interlock tab is equidistant from the rail with the first socket,
wherein the first and second interlock tabs are sized and shaped to interlock with the first and second sockets for end-to-end connection of the wall plate with one or more like wall plates for facilitating aligning multiple wall plates in a straight line along the longitudinal axis, wherein any of the multiple wall plates can be rotated 180 degrees and still fit together for flexibility in mounting and mating the multiple wall plates.

9. The wall plate as recited in claim 8, further comprising:
a first end stop extending out of plane from the surface mount section at the first lateral end of the surface mount section, configured to stop rail mounted components sliding off the rail at the first lateral end of the surface mount section; and
a second end stop extending out of plane from the surface mount section at the second lateral end of the surface mount section, configured to stop rail mounted components sliding off the rail at the second lateral end of the surface mount section.

10. The wall plate as recited in claim 9, wherein each of the first and second cable supports, the first and second support risers, the surface mount section, the mounting plate, the rail risers, the mounting flanges, and the first and second end stops defines a respective front surface and an opposed respective back surface, wherein the respective front and back surfaces are parallel to one another and are free from overhangs so the back surfaces of the wall plate can stack flush against the front surfaces of a like wall plate.

11. A stack of wall plates comprising:
a first wall plate as recited in claim 10; and
a second wall plate as recited in claim 10 stacked against the first wall plate with the respective front surfaces of the first wall plate flush against the respective back surfaces of the second wall plate.

12. The stack of wall plates as recite in claim 11, further comprising:
a third wall plate as recited in claim 10 stacked against the second wall plate with the respective front surfaces of the second wall plate flush against the respective back surfaces of the third wall plate.

13. A method of mounting modules comprising:
attaching one or more DIN rail style modules to the rail of a first wall plate as recited in claim 10; and
securing cables connected to the one or more DIN rail style modules individually or in one or more groups to the first cable support with ties.

14. The method as recited in claim 13, further comprising securing cables to the second cable support, extending in a direction opposite from that of cables secured to the first cable support, in pararticular, wherein the ties are tied to cable tie pillars or to cable tie comb teeth, or to both.

15. The method as recited in claim 13, further comprising mounting the first wall plate to a first surface with fasteners prior to attaching the one or more DIN rail style modules to the rail, in particular, further comprising mounting a second wall plate to the first surface in end-to-end engagement with the first wall plate, in particular, wherein the second wall plate is shorter along its longitudinal axis than is the first wall plate.
